# EUROPÄISCHE PATENTSCHRIFT

(11) **EP 4 551 848 B1**
(45) Veröffentlichungstag und Bekanntmachung des Hinweises auf die Patenterteilung: **05.08.2026**
(21) Anmeldenummer: 23733342.2
(22) Anmeldetag: 19.06.2023
(51) Int. Cl.: F16J 15/34, H01R 31/00

(54) **GLEITRINGDICHTUNGSANORDNUNG MIT SENSORANORDNUNG**
SLIDING-RING SEAL ARRANGEMENT HAVING SENSOR ARRANGEMENT
AGENCEMENT DE JOINT D'ÉTANCHÉITÉ À BAGUE COULISSANTE AYANT UN AGENCEMENT DE CAPTEUR

(30) Priorität: 05.07.2022 DE 102022116780
(43) Veröffentlichungstag der Anmeldung: 14.05.2025
(73) Patentinhaber: EagleBurgmann Germany GmbH & Co. KG, 82515 Wolfratshausen (DE)
(72) Erfinder: MÜLLER, Michael, 83673 Bichl (DE); RAPP, Christoph, 89075 Ulm (DE); VON SCHMIDT, Phillip, 82067 Ebenhausen (DE); GRÖLL, Andreas, 82335 Berg (DE); BAUER, Johannes, 83646 Wackersberg (DE); PROEBSTL, Johannes, 82515 Wolfratshausen (DE)
(74) Vertreter: Hoefer & Partner Patentanwälte mbB
(86) Internationale Anmeldenummer: PCT/EP2023/066473
(87) Internationale Veröffentlichungsnummer: WO 2024/008431

(56) Entgegenhaltungen:
- DE-B4- 102005 053 335
- DE-U1- 202009 008 088
- US-A1- 2001 030 396
- US-A1- 2005 014 408

## Beschreibung

Die vorliegende Erfindung betrifft eine Gleitringdichtungsanordnung mit einer Sensoranordnung, welche einfach montierbar ist und einen verbesserten Schutz von empfindlichen Sensoren ermöglicht.

Gleitringdichtungsanordnungen sind aus dem Stand der Technik in unterschiedlichen Ausgestaltungen bekannt. In jüngster Zeit werden verstärkt Sensoren verwendet, um im Betrieb der Gleitringdichtungsanordnung Informationen hinsichtlich eines Zustands von Bauteilen der Gleitringdichtungsanordnung zu erhalten. Die Verwendung von Sensoren macht jedoch die Montage von Gleitringdichtungsanordnungen erheblich komplizierter, da neben den üblichen Bauteilen noch die Sensoren nebst Kabeln und dgl. mitmontiert werden müssen. Hier treten häufig Beschädigungen an Kabeln und/oder Sensoren auf. Auch ist ein Abdichten von Kabeln und Sensorbauteilen mit zusätzlichem Aufwand verbunden und häufig schwierig. Noch problematischer ist die Verwendung von Sensoren bei einer Abdichtung von explosionsgefährdenden Medien. Hier sind zusätzliche explosionsschützende Anforderungen hinsichtlich elektrischen Verbindungen und Kabeln sowie zusätzlicher Schutz gegen Schmutz und/oder Feuchtigkeiten notwendig, was eine Störanfälligkeit bei der Verwendung von Sensoren weiter erhöhen kann. Die US 2001/0030396 A1 zeigt eine Gleitringdichtungsanordnung gemäß dem Oberbegriff des Anspruchs 1.

Es ist daher Aufgabe der vorliegenden Erfindung, eine Gleitringdichtungsanordnung mit Sensoren bereitzustellen, welche bei einfachem Aufbau eine vereinfachte Montage ermöglicht und insbesondere auch einen verbesserten Schutz von Kabeln und elektrischen Verbindungen und dgl. von Sensoren bereitstellt.

Diese Aufgabe wird durch eine Gleitringdichtungsanordnung mit den Merkmalen des Anspruchs 1 gelöst. Die Unteransprüche zeigen bevorzugte Weiterbildungen der Erfindung.

Die erfindungsgemäße Gleitringdichtungsanordnung mit den Merkmalen des Anspruchs 1 weist den Vorteil auf, dass eine deutlich vereinfachte und schnellere Montage von Sensoren und zugehörigen Leitungsanordnungen möglich ist. Hierbei ist es möglich, dass die Sensoren mitsamt den Leitungsanordnungen schon bei der Herstellung der Gleitringdichtung in die jeweiligen Bauteile vormontiert werden können, so dass bei einer Endmontage bei einem Kunden keine separate Montage von Sensoren oder dgl. notwendig ist. Hierdurch wird die Gefahr von Beschädigungen von Sensoren und deren Bauteile bei der Montage beim Kunden signifikant reduziert bzw. vollständig eliminiert. Die Gleitringdichtungsanordnung kann dabei auch in Explosionsschutzbereichen eingesetzt werden. Weiterhin ist die erfindungsgemäße Lösung sehr kompakt und kleinbauend, was bei Gleitringdichtungsanordnungen besonders vorteilhaft ist, da häufig an den Positionen, an denen die Gleitringdichtungsanordnung angeordnet ist, nur ein begrenzter Bauraum zur Verfügung steht.

Dies wird erfindungsgemäß dadurch erreicht, dass die Gleitringdichtungsanordnung eine Gleitringdichtung mit einem rotierenden und einem stationären Gleitring aufweist, welche zwischen ihren Gleitflächen einen Dichtspalt definieren. Ferner umfasst die Gleitringdichtungsanordnung eine vormontierte Baugruppe mit einem ersten Sensor mit einer ersten Leitungsanordnung und einem zweiten Sensor mit einer zweiten Leitungsanordnung. Die erste und zweite Leitungsanordnung sind zu einem gemeinsamen Kabelbaum zusammengeführt. Am Ende des Kabelbaums ist ein gemeinsamer mehrpoliger Kombistecker mit einer Vielzahl von elektrischen Anschlüssen bzw. Polen angeordnet. Somit werden die Leitungsanordnungen der einzelnen Sensoren zu einem Kabelbaum zusammengeführt und dann gemeinsam zum mehrpoligen Kombistecker geführt. Dadurch ist es möglich, dass die Sensoren in den jeweiligen Bauteilen der Gleitringdichtungsanordnung, beispielsweise einem Gehäuse oder einem stationären Gleitring oder einem Gleitringträger, vormontiert werden und bei der Montage dann lediglich noch der mehrpolige Kombistecker in eine Steckeraufnahme eingesteckt werden muss. Somit ergibt sich vor Ort beim Kunden eine sehr einfache und schnelle Montage ohne Gefahr einer Beschädigung der Sensoren oder Leitungsbauteilen oder dgl.

Ferner ist der erste und/oder zweite Sensor in einer Sacklochbohrung im stationären Gleitring angeordnet. Der Sensor ist dabei durch eine Bohrung in einem stationären Bauteil, vorzugsweise einem Gehäuse, hindurchgeführt. Zwischen dem Sensor und der Bohrung im stationären Bauteil ist ein Dichtelement angeordnet, durch welches der Sensor hindurchgeführt ist. Das Dichtelement ist hierbei mittels eines Schraubbolzens oder dgl. vorgespannt und dichtet am stationären Bauteil und dem Sensor ab. Die Bohrung im stationären Bauteil kann hierbei vorzugsweise eine Stufe aufweisen, an welcher das Dichtelement abdichtet. Das Dichtelement ist dabei vorzugsweise ein O-Ring, durch welchen der Sensor hindurchgeführt ist. Dadurch dichtet der O-Ring am Außenumfang des Sensors und am Innenumfang der Bohrung im stationären Bauteil ab.

Vorzugsweise weist der erste und zweite Sensor jeweils ein Außengewinde an einem Gehäuseteil des Sensors auf. Dadurch können die Sensoren einfach und schnell in die jeweiligen Bauteile eingeschraubt und vormontiert werden.

Weiter bevorzugt weist der stationäre Gleitring oder ein stationäres Bauteil der Gleitringdichtungsanordnung, beispielsweise ein Gehäuse oder ein stationärer Gleitringträger, eine Gewindebohrung auf, in welche die Sensoren einschraubbar sind. Alternativ ist jeweils eine Gewindehülse mit Innengewinde vorgesehen, welche in einer Bohrung eines stationären Bauteils angeordnet ist, um die Schraubverbindung mit den Sensoren herzustellen.

Weiter bevorzugt umfasst die Gleitringdichtungsanordnung eine Abdeckung mit einer Durchführung für den Kabelbaum, wobei an der Durchführung eine Dichtung angeordnet ist. Die Dichtung kann beispielsweise ein O-Ring sein, durch welche der Kabelbaum hindurchgeführt ist oder alternativ eine Hot-Melt-Dichtung.

Gemäß einer weiteren bevorzugten Ausgestaltung der Erfindung sind der erste Sensor und der zweite Sensor unterschiedlich. D.h., die Erfindung kann mit unterschiedlichsten Sensoren für unterschiedliche physikalische Größen realisiert werden, deren jeweilige Leitungsanordnungen zu einem Kabelbaum zusammengeführt werden und gemeinsam aus der Gleitringdichtungsanordnung herausgeführt werden können.

Die Sensoren sind ausgewählt aus der Gruppe von Temperatursensoren, Drucksensoren, Vibrationssensoren, Drehzahlsensoren, optischen Sensoren, Leckagesensoren oder dgl.

Weiter bevorzugt weist der Schraubbolzen eine axiale Durchgangsöffnung auf, durch welche der Sensor und/oder eine Leitungsanordnung hindurchgeführt ist. Somit ist der Sensor und/oder eine Leitungsanordnung durch den Schraubbolzen und das Dichtelement hindurchgeführt und der Schraubbolzen stellt gleichzeitig eine Abdichtung am stationären Bauteil wie auch eine Befestigung des Sensors und/oder eine Leitungsanordnung am stationären Bauteil bereit.

Die Gleitringdichtungsanordnung ist vorzugsweise eine Tandemanordnung mit einer ersten und einer zweiten Gleitringdichtung, wobei an jeder Gleitringdichtung mindestens ein Sensor angeordnet ist.

Weiter bevorzugt ist im stationären Bauteil eine Ausnehmung, vorzugsweise an einem Außenumfang des stationären Bauteils, ausgebildet, in welcher alle Leitungsanordnungen der Sensoren münden. In der Ausnehmung werden die Leitungsanordnungen dann zum Kabelbaum zusammengeführt und der Kabelbaum wird aus der Ausnehmung und der Gleitringdichtung herausgeführt.

Die Ausnehmung ist vorzugsweise mittels der Abdeckung abgedeckt. Die Durchführung für den Kabelbaum ist weiter bevorzugt zwischen der Abdeckung und dem Außenumfang des Gehäuses ausgebildet.

Nachfolgend werden bevorzugte Ausführungsbeispiele der Erfindung unter Bezugnahme auf die begleitende Zeichnung im Detail beschrieben. In der Zeichnung ist:
- Fig. 1: eine schematische Schnittansicht einer Gleitringdichtungsanordnung mit Sensoren gemäß einem ersten Ausführungsbeispiel der Erfindung,
- Fig. 2: eine schematische, perspektivische Ansicht eines Teilbereichs der Gleitringdichtungsanordnung von Fig. 1, an welcher der Kabelbaum zusammengeführt ist, und
- Fig. 3: eine schematische Schnittansicht einer Gleitringdichtung gemäß einem zweiten Ausführungsbeispiel der Erfindung.

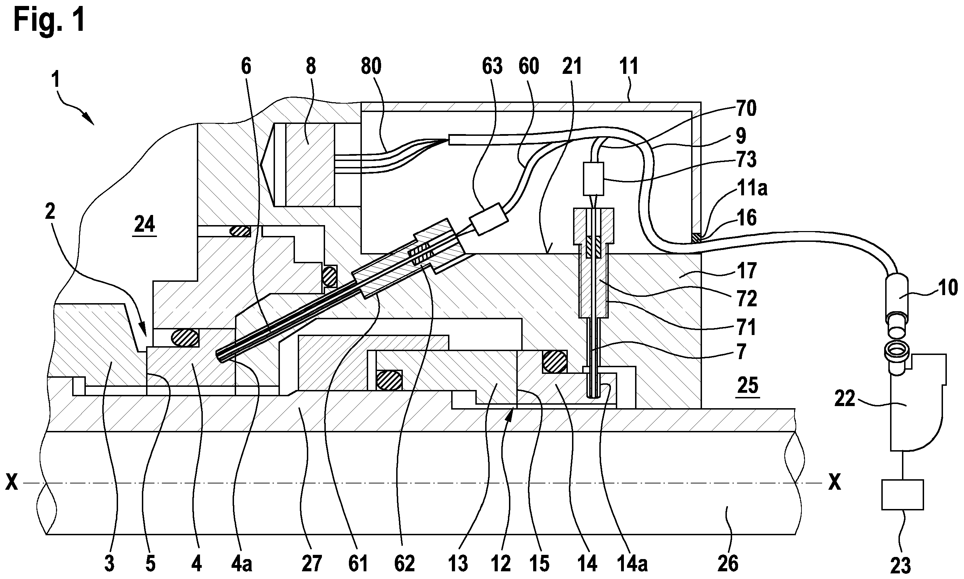

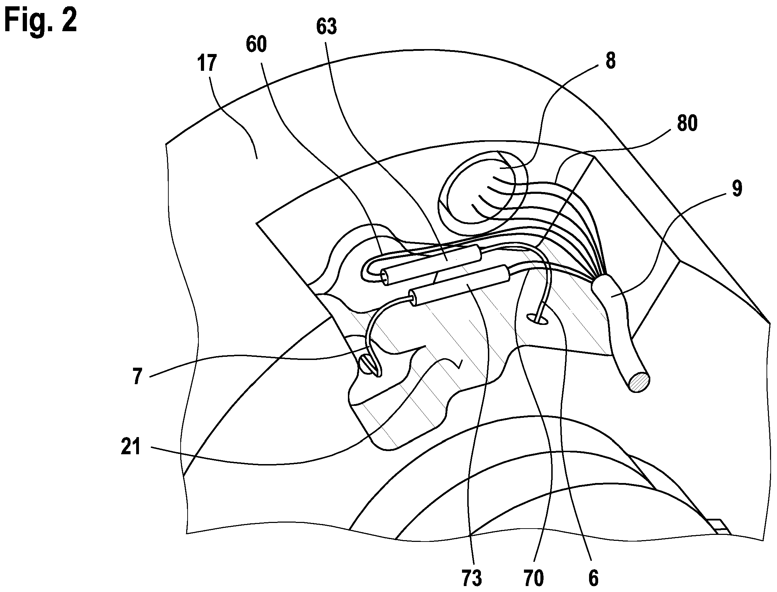

Nachfolgend wird unter Bezugnahme auf die Fig. 1 und 2 eine Gleitringdichtungsanordnung 1 gemäß einem ersten Ausführungsbeispiel der Erfindung im Detail beschrieben.

Wie aus Fig. 1 ersichtlich ist, ist die Gleitringdichtungsanordnung 1 des ersten Ausführungsbeispiels eine sog. Tandem-Gleitringdichtung, welche eine erste Gleitringdichtung 2 und eine zweite Gleitringdichtung 12 umfasst, welche in Reihe in Axialrichtung X-X nacheinander geschaltet sind. Die erste und zweite Gleitringdichtung 2, 12 dichten einen Produktraum 24 von einer Atmosphäre 25 an einer Welle 26 ab.

Die Gleitringdichtungsanordnung 1 ist eine vormontierte Einheit, welche auf einer Hülse 27 vormontiert ist.

Die erste Gleitringdichtung 2 umfasst einen rotierenden Gleitring 3 und einen stationären Gleitring 4, welche zwischen ihren Gleitflächen einen Dichtspalt 5 definieren.

Die zweite Gleitringdichtung 12 umfasst einen rotierenden Gleitring 13 und einen stationären Gleitring 14, welche zwischen ihren Gleitflächen einen Dichtspalt 15 definieren.

Die Gleitringdichtungsanordnung 1 umfasst ferner ein stationäres Bauteil 17 in Form eines Gehäuses.

Weiterhin umfasst die Gleitringdichtungsanordnung 1 drei Sensoren, nämlich einen ersten Sensor 6, einen zweiten Sensor 7 und einen dritten Sensor 8.

Der erste Sensor 6 ist ein Temperatursensor, welcher in einer Sacklochbohrung 4a im stationären Gleitring 4 der ersten Gleitringdichtung 2 angeordnet ist. Der zweite Sensor 7 ist ebenfalls ein Temperatursensor, welcher in einer Sacklochbohrung 14a im stationären Gleitring 14 der zweiten Gleitringdichtung 12 angeordnet ist. Der dritte Sensor 8 ist ein Drucksensor, welcher im stationären Bauteil 17 angeordnet ist. Der Drucksensor ist über Spalte in Verbindung mit dem Produktraum 24 und misst den Produktdruck im Produktraum 24.

Der erste und zweite Sensor 6, 7, welche beide als Temperatursensoren ausgebildet sind, messen jeweils die vorhandenen Temperaturen an den stationären Gleitringen 4, 14, um Rückschlüsse auf ein Betriebsverhalten der ersten und zweiten Gleitringdichtung 2, 12 zu erhalten.

Der erste Sensor 6 umfasst eine erste Leitungsanordnung 60, welche aus dem stationären Bauteil 17 herausgeführt ist. Der zweite Sensor 7 umfasst eine zweite Leitungsanordnung 70, welche ebenfalls aus dem stationären Bauteil 17 herausgeführt ist. Der dritte Sensor 8 umfasst eine dritte Leitungsanordnung 80, die ebenfalls aus dem stationären Bauteil 17 herausgeführt ist. Die drei Leitungsanordnungen 60, 70, 80 sind dann zu einem gemeinsamen Kabelbaum 9 zusammengeführt. Der gemeinsame Kabelbaum 9 weist an einem von den Sensoren abgewandten Ende eine mehrpoligen Kombistecker 10 mit einer Vielzahl von Anschlüssen auf.

Der Kombistecker 10 muss lediglich in eine Steckeraufnahme 22 eingesteckt werden, welche mit einer Auswerteeinheit 23 bzw. einer Steuereinheit verbunden ist, um die von den Sensoren 6, 7, 8 aufgenommenen Größen zu verarbeiten.

Die Zusammenführung der drei Leitungsanordnungen 60, 70, 80 zum gemeinsamen Kabelbaum 9 erfolgt an einer Ausnehmung 21 am stationären Bauteil 17, welches mittels einer Abdeckung 11 abgedeckt ist. Um den gemeinsamen Kabelbaum 9 aus der Ausnehmung 21 herauszuführen, ist eine Durchführung 11a zwischen dem stationären Bauteil 17 und der Abdeckung 11 vorgesehen. An der Durchführung 11a ist eine Dichtung 16, beispielsweise ein O-Ring, durch welchen der Kabelbaum 9 hindurchgeführt ist, vorgesehen.

Wie weiter aus Fig. 1 ersichtlich ist, weist der erste Sensor 6 ein Gehäuseteil 62 auf, an welchem ein Außengewinde 61 vorgesehen ist. Der erste Sensor 6 kann damit in eine Gewindebohrung im stationären Bauteil 17 eingeschraubt werden und sicher befestigt werden. Der zweite Sensor 7 weist ein Gehäuseteil 72 auf, an welchem ein Aussengewinde 71 ist.

Um zu vermeiden, dass die einzelnen Kabel der Leitungsanordnungen 60, 70, 80 beschädigt werden, sind an der ersten Leitungsanordnung 60 eine Schutzhülse 63 und an der zweiten Leitungsanordnung 70 eine Schutzhülse 73 vorgesehen.

Wie im Detail aus Fig. 2 ersichtlich ist, sind die Leitungsanordnungen 60, 70, 80 in die Ausnehmung 21 aus dem stationären Bauteil 17 herausgeführt. Die Ausnehmung 21 ist an einem Außenumfang des stationären Bauteils angeordnet und mit der Abdeckung 11 geschützt. Innerhalb der Ausnehmung 21 werden die Leitungsanordnungen 60, 70, 80 zum gemeinsamen Kabelbaum 9 zusammengeführt, der dann aus der Ausnehmung 21 herausgeführt wird.

Somit kann eine vormontierte Gleitringdichtungsanordnung 1 bereitgestellt werden, bei der Sensoren 6, 7, 8 verwendet werden, welche nicht mehr beim Kunden vor Ort montiert werden müssen, sondern beim Hersteller der Gleitringdichtungsanordnung vormontiert werden können. Durch die Abdeckung 11 sind die Leitungsanordnungen 60, 70, 80 vor Beschädigungen bei der Montage der Gleitringdichtungsanordnung 1 an der Welle 26 geschützt. Ein Monteur muss dann lediglich noch den Kombistecker 10 in die Steckeraufnahme 22 einstecken und die Gleitringdichtungsanordnung mit Sensoren ist dann betriebsbereit.

In diesem Ausführungsbeispiel sind der erste Sensor 6 und der zweite Sensor 7 Temperatursensoren. Der dritte Sensor 8 ist ein Drucksensor. Somit können unterschiedlichste Sensoren auf einfache Weise verkabelt werden, unabhängig von einer Anzahl von einzelnen Leitungen der jeweiligen Leitungsanordnungen 60, 70, 80. Die Erfindung verhindert insbesondere ein Kabelgewirr, welches bisher im Stand der Technik noch bei der Montage der Gleitringdichtungsanordnung mit Sensoren vorhanden ist. Hier kommt es häufig zu falschen elektrischen Verbindungen der einzelnen Kabel, was nach erfolgter Montage der Gleitringdichtungsanordnung dann wieder aufwendig in richtiger Weise verkabelt werden muss.

Durch die Zusammenführung in der Aussparung 21 ist ein wirksamer Schutz der einzelnen Kabel der Leitungsanordnungen 60, 70, 80 möglich, da diese bei der Montage an der abzudichtenden Welle 26 beim Kunden nicht mehr berührt werden müssen.

Die Gleitringdichtung 1 eignet sich dabei insbesondere in Einsatzgebieten mit explosionsgefährdenden Stoffen, da die Abdeckung 11 auch einen Zündschutz bereitstellt, um unerwünschte Explosionen, ausgelöst durch die Sensoren und/oder deren Leitungsanordnungen, zu vermeiden. Auch bietet die Abdeckung 11 einen hervorragenden Schutz gegenüber Schmutz und Feuchtigkeit, welche die Funktion der Sensoren 6, 7, 8 beeinträchtigen könnten.

Die Abdeckung 11 gemeinsam mit der Dichtung 16 ermöglicht ferner eine verbesserte Abschirmung gegenüber elektrischen und/oder magnetischen Feldern, welche die Funktion der Sensoren 6, 7, 8 stören könnten. Hierdurch wird auch vorteilhaft eine Störanfälligkeit bei einer Datenübertragung reduziert.

Die Verschraubung der Sensoren 6, 7, 8 im stationären Bauteil 17 ist druckdicht ausgeführt, so dass keine Leckage über die für die Sensoren 6, 7, 8 notwendigen Bohrungen auftreten kann.

An der Dichtung 16 ist vorzugsweise noch eine Zugentlastung angeordnet, um Beschädigungen der Leitungsanordnungen beim Einstecken des Kombisteckers 10 in die Steckeraufnahme 22 zu vermeiden.

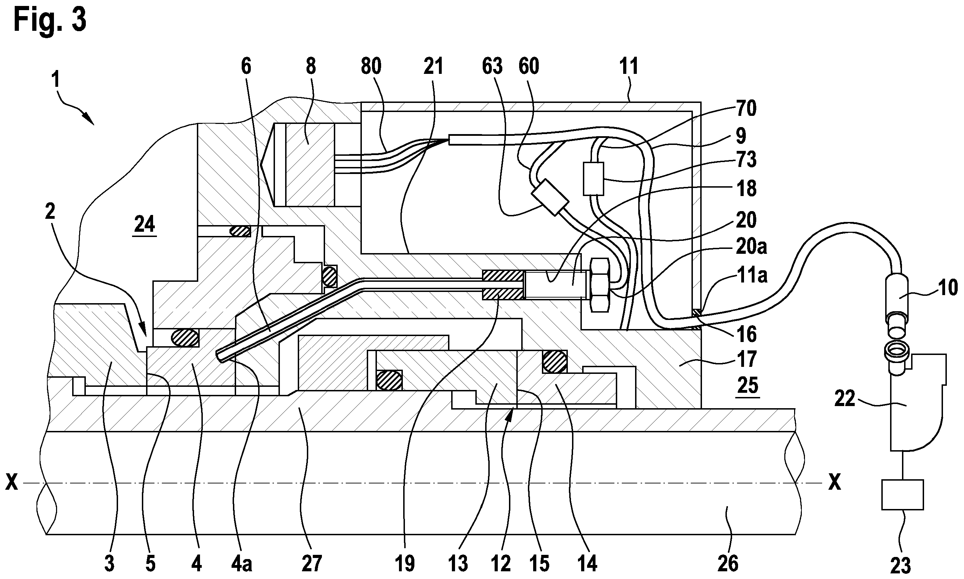

Fig. 3 zeigt eine Gleitringdichtungsanordnung 1 gemäß einem zweiten Ausführungsbeispiel der Erfindung. Gleiche bzw. funktional gleiche Teile sind mit den gleichen Bezugszeichen wie im ersten Ausführungsbeispiel bezeichnet. Im Unterschied zum ersten Ausführungsbeispiel ist beim zweiten Ausführungsbeispiel eine Fixierung des ersten Sensors 6 unterschiedlich. Der zweite Sensor ist nicht dargestellt. Wie aus Fig. 3 ersichtlich ist, ist die erste Leitungsanordnung 60 durch einen Schraubbolzen 20 hindurchgeführt, welcher eine mittige, in seiner Axialachse liegende Durchgangsöffnung 20a aufweist. Der Schraubbolzen 20 ist in eine Gewindebohrung 18 im stationären Bauteil 17 eingeschraubt. Zwischen einem Absatz 18a der Gewindebohrung und dem Schraubbolzen ist ein Dichtelement 19 angeordnet, welches durch Einschrauben des Schraubbolzens 18 gegen den Absatz 18a gedrückt wird. Dadurch wird eine druckdichte Abdichtung des Sensors 6 ermöglicht. Das Dichtelement 19 ist ein schlauchartiges Dichtelement, durch welches der Sensor 6 ebenfalls hindurchgeführt ist. Durch den Quetschvorgang mittels des Schraubbolzens 20 wird das Dichtelement 19 zusammengedrückt und dichtet somit am Außenumfang des Sensors 6 sowie am Innenumfang der Bohrung 18 drucksicher ab. Ansonsten entspricht dieses Ausführungsbeispiel dem vorhergehenden Ausführungsbeispiel, so dass auf die dort gegebene Beschreibung verwiesen werden kann.

### Bezugszeichenliste

- 1: Gleitringdichtungsanordnung
- 2: erste Gleitringdichtung
- 3: rotierender Gleitring
- 4: stationärer Gleitring
- 4a: Sacklochbohrung
- 5: Dichtspalt
- 6: erster Sensor
- 7: zweiter Sensor
- 8: dritter Sensor
- 9: gemeinsamer Kabelbaum
- 10: Kombistecker
- 11: Abdeckung
- 11a: Durchführung
- 12: zweite Gleitringdichtung
- 13: rotierender Gleitring
- 14: stationärer Gleitring
- 14a: Sacklochbohrung
- 15: Dichtspalt
- 16: Dichtung
- 17: stationäres Bauteil / Gehäuse
- 18: Gewindebohrung
- 18a: Absatz
- 19: Dichtelement
- 20: Schraubbolzen
- 20a: Durchgangsöffnung
- 21: Ausnehmung
- 22: Steckeraufnahme
- 23: Auswerteeinheit
- 24: Produktraum
- 25: Atmosphäre
- 26: Welle
- 27: Hülse der Welle
- 60: erste Leitungsanordnung
- 61: Außengewinde
- 62: Gehäuseteil des ersten Sensors
- 63: Schutzhülse
- 70: zweite Leitungsanordnung
- 71: Außengewinde
- 72: Gehäuseteil des zweiten Sensors
- 73: Schutzhülse
- 80: dritte Leitungsanordnung
- X-X: Axialrichtung

## Patentansprüche

1. Gleitringdichtungsanordnung umfassend:
- eine Gleitringdichtung (2; 12) mit einem rotierenden Gleitring (3; 13) und einem stationären Gleitring (4; 14), welche zwischen ihren Gleitflächen einen Dichtspalt (5; 15) definieren, und
- eine vormontierte Baugruppe mit einem ersten Sensor (6) und einer ersten Leitungsanordnung (60) und einem zweiten Sensor (7) mit einer zweiten Leitungsanordnung (70),
**dadurch gekennzeichnet, dass**
- die erste Leitungsanordnung (60) und die zweite Leitungsanordnung (70) zu einem gemeinsamen Kabelbaum (9) zusammengeführt sind,
- ein freies Ende des gemeinsamen Kabelbaums (9) einen mehrpoligen Kombistecker (10) mit einer Vielzahl von Kontakten aufweist, und
- der erste Sensor (6) und/oder der zweite Sensor (7) in einer Sacklochbohrung (4a; 14a) im stationären Gleitring (4; 14) angeordnet ist und durch eine Bohrung (18) in einem stationären Bauteil (17) hindurchgeführt ist, wobei die Bohrung (18) mittels eines Dichtelements (19) und eines Schraubbolzens (20), der das Dichtelement (19) vorspannt, abgedichtet ist.

2. Gleitringdichtungsanordnung nach Anspruch 1, wobei der erste Sensor (6) und der zweite Sensor (7) jeweils ein Außengewinde (61; 71) an einem Gehäuseteil (62; 72) des Sensors aufweisen.

3. Gleitringdichtungsanordnung nach einem der vorhergehenden Ansprüche, wobei ein stationäres Bauteil (17) der Gleitringdichtungsanordnung ein Gewinde aufweist, in welches der Sensor (6) eingeschraubt ist.

4. Gleitringdichtungsanordnung nach einem der vorhergehenden Ansprüche, ferner umfassend eine Abdeckung (11) mit einer Durchführung (11a) für den Kabelbaum (9), wobei an der Durchführung (11a) eine Dichtung (16) angeordnet ist.

5. Gleitringdichtungsanordnung nach einem der vorhergehenden Ansprüche, wobei der erste Sensor (6) und der zweite Sensor (7) unterschiedliche Sensoren für unterschiedliche physikalische Größen sind.

6. Gleitringdichtungsanordnung nach einem der vorhergehenden Ansprüche, wobei der erste Sensor (6) und/oder der zweite Sensor (7) ausgewählt ist, aus der Gruppe eines Temperatursensors, eines Drucksensors, eines Vibrationssensors, eines Drehzahlsensors, eines optischen Sensors, eines Leckagesensors.

7. Gleitringdichtungsanordnung nach Anspruch 1, wobei der Schraubbolzen (20) eine axiale Durchgangsöffnung aufweist, durch welche der Sensor (6) hindurchgeführt ist.

8. Gleitringdichtungsanordnung nach einem der vorhergehenden Ansprüche, welche zwei Gleitringdichtungen (2, 12) aufweist, die in Reihe an einer Hülse (27) angeordnet sind, wobei an jeder Gleitringdichtung mindestens ein Sensor (6, 7) angeordnet ist.

9. Gleitringdichtungsanordnung nach einem der vorhergehenden Ansprüche, wobei im stationären Bauteil (17) eine Ausnehmung (21) ausgebildet ist, in welcher alle Leitungsanordnungen (60, 70, 80) der Sensoren münden und in welcher die Leitungsanordnungen (60, 70, 80) zum gemeinsamen Kabelbaum (9) zusammengeführt werden.

## Claims

1. Mechanical seal arrangement, comprising:
- a mechanical seal (2; 12) with a rotating slide ring (3; 13) and a stationary slide ring (4; 14), which define a sealing gap (5; 15) between the sliding surfaces thereof,
- a pre-assembled assembly group with a first sensor (6) and a first cable arrangement (60) and a second sensor (7) with a second cable arrangement (70),
- **characterized in that** the first cable arrangement (60) and the second cable arrangement (70) are brought together to form a common cable harness (9),
- a free end of the common cable harness (9) comprises a multi-pole combination plug (10) with a plurality of contacts, and
- the first sensor (6) and/or the second sensor (7) is arranged in a blind hole (4a; 14a) in the stationary slide ring (4; 14) and is guided through a hole (18) in a stationary component (17), wherein the hole (18) is sealed by means of a sealing member (19) and a screw bolt (20) which pretensions the sealing member (19).

2. Mechanical seal arrangement according to claim 1, wherein the first sensor (6) and the second sensor (7) each comprise an external thread (61; 71) on a housing part (62; 72) of the sensor.

3. Mechanical seal arrangement according to any one of the preceding claims, wherein a stationary component (17) of the mechanical seal arrangement comprises a thread into which the sensor (6) is screwed.

4. Mechanical seal arrangement according to any one of the preceding claims, further comprising a cover (11) with a lead-through (11a) for the cable harness (9), wherein a seal (16) is arranged on the lead-through (11a).

5. Mechanical seal arrangement according to any one of the preceding claims, wherein the first sensor (6) and the second sensor (7) are different sensors for different physical quantities.

6. Mechanical seal arrangement according to any one of the preceding claims, wherein the first sensor (6) and/or the second sensor (7) is selected from the group of a temperature sensor, a pressure sensor, a vibration sensor, a speed sensor, an optical sensor, a leakage sensor.

7. Mechanical seal arrangement according to claim 1, wherein the screw bolt (20) comprises an axial through-opening through which the sensor (6) is guided.

8. Mechanical seal arrangement according to any one of the preceding claims, which comprises two mechanical seals (2, 12) which are arranged in series on a sleeve (27), wherein at least one sensor (6, 7) is arranged on each mechanical seal.

9. Mechanical seal arrangement according to any one of the preceding claims, wherein a recess (21) is formed in the stationary component (17), in which recess all the cable arrangements (60, 70, 80) of the sensors end and in which recess the cable arrangements (60, 70, 80) are brought together to form the common cable harness (9).

## Revendications

1. Agencement de garniture mécanique d'étanchéité, comprenant :
- une garniture mécanique d'étanchéité (2 ;12) avec une bague de glissement rotative (3 ; 13) et une bague de glissement fixe (4 ; 14), lesquelles définissent entre leurs surfaces de glissement une fente d'étanchéité (5 ; 15), et
- un ensemble préassemblé avec un premier capteur (6) et un premier agencement de conduite (60) et un second capteur (7) avec un second agencement de conduite (70),
**caractérisé en ce que**
- le premier agencement de conduite (60) et le second agencement de conduite (70) sont réunis en un faisceau de câbles commun (9),
- une extrémité libre du faisceau de câbles commun (9) présente une fiche combinée multipolaire (10) avec une pluralité de contacts, et
- le premier capteur (6) et/ou le second capteur (7) est disposé dans un trou borgne (4a ; 14a) dans la bague de glissement fixe (4 ; 14) et est traversé par un alésage (18) dans un composant fixe (17), dans lequel l'alésage (18) est étanchéifié au moyen d'un élément d'étanchéité (19) et d'un boulon fileté (20) qui précontraint l'élément d'étanchéité (19).

2. Agencement de garniture mécanique d'étanchéité selon la revendication 1, dans lequel le premier capteur (6) et le second capteur (7) présentent chacun un filetage mâle (61 ; 71) sur une partie de boîtier (62 ; 72) du capteur.

3. Agencement de garniture mécanique d'étanchéité selon l'une quelconque des revendications précédentes, dans lequel un composant fixe (17) de l'ensemble de garniture mécanique d'étanchéité présente un filetage dans lequel le capteur (6) est vissé.

4. Agencement de garniture mécanique d'étanchéité selon l'une quelconque des revendications précédentes, comprenant en outre un couvercle (11) avec un passage (11a) pour le faisceau de câbles (9), dans lequel un joint d'étanchéité (16) est disposé sur le passage (11a).

5. Agencement de garniture mécanique d'étanchéité selon l'une quelconque des revendications précédentes, dans lequel le premier capteur (6) et le second capteur (7) sont des capteurs différents pour des grandeurs physiques différentes.

6. Agencement de garniture mécanique d'étanchéité selon l'une quelconque des revendications précédentes, dans lequel le premier capteur (6) et/ou le second capteur (7) est choisi dans le groupe d'un capteur de température, d'un capteur de pression, d'un capteur de vibrations, d'un capteur de vitesse, d'un capteur optique, d'un capteur de fuite.

7. Agencement de garniture mécanique d'étanchéité selon la revendication 1, dans lequel le boulon fileté (20) présente une ouverture traversante axiale à travers laquelle passe le capteur (6).

8. Agencement de garniture mécanique d'étanchéité selon l'une quelconque des revendications précédentes, qui présente deux garnitures mécaniques d'étanchéité (2, 12) qui sont disposées en série sur un manchon (27), dans lequel au moins un capteur (6, 7) est disposé sur chaque garniture mécanique d'étanchéité.

9. Agencement de garniture mécanique d'étanchéité selon l'une quelconque des revendications précédentes, dans lequel un évidement (21), dans lequel débouchent tous les agencements de conduite (60, 70, 80) des capteurs et dans lequel les agencements de conduite (60, 70, 80) sont réunis en le faisceau de câbles commun (9), est réalisé dans le composant fixe (17).
